# EUROPÄISCHE PATENTSCHRIFT

(11) **EP 1 185 486 B1**
(45) Veröffentlichungstag und Bekanntmachung des Hinweises auf die Patenterteilung: **23.04.2003**
(21) Anmeldenummer: 00941922.7
(22) Anmeldetag: 19.05.2000
(51) Int. Cl.: C04B 28/26, C09D 1/04, C09J 1/02

(54) **SILIKATGEBUNDENE MATERIALIEN WIE BESCHICHTUNGS-, FORM-, KLEBE- UND SPACHTELMATERIAL, BINDEMITTEL UND VERFAHREN ZU DEREN HERSTELLUNG**
SILICATE-BOUND MATERIALS SUCH AS COATING, MOLDING, ADHESIVE AND FILLER MATERIAL, BINDERS AND METHODS FOR THEIR PRODUCTION
MATERIAUX LIES PAR DU SILICATE, TELS QUE MATERIAU DE RECOUVREMENT, MATERIAU MOULABLE, MATERIAU ADHESIF ET MASTIC, ET LIANTS ET LEURS PROCEDES DE PRODUCTION

(30) Priorität: 02.06.1999 DE 19925412
(43) Veröffentlichungstag der Anmeldung: 13.03.2002
(73) Patentinhaber: DEUTSCHE AMPHIBOLIN-WERKE VON ROBERT MURJAHN GmbH + Co. KG, 64372 Ober-Ramstadt (DE)
(72) Erfinder: RADEMACHER, Ingo, D-64807 Dieburg (DE); BISTER, Erhard, D-68846 Gross-Zimmern (DE)
(74) Vertreter: Pfenning, Meinig & Partner GbR
(86) Internationale Anmeldenummer: DE0001655
(87) Internationale Veröffentlichungsnummer: WO00073237

(56) Entgegenhaltungen:
- CH-A- 501 720
- DE-A- 1 943 115
- DE-A- 2 110 059
- FR-A- 2 090 931
- DATABASE WPI Section Ch, Week 197708 Derwent Publications Ltd., London, GB; Class L02, AN 1977-13651Y XP002149469 & JP 52 003625 A (NISSAN CHEM IND LTD), 12. Januar 1977 (1977-01-12) -& CHEMICAL ABSTRACTS, vol. 86, no. 24, 13. Juni 1977 (1977-06-13) Columbus, Ohio, US; abstract no. 176009z, A.YOSHIDA: "Binder for cement,gypsum, and ceramic products" XP000188872
- PATENT ABSTRACTS OF JAPAN vol. 1998, no. 06, 30. April 1998 (1998-04-30) & JP 10 036843 A (MITSUI PETROCHEM IND LTD), 10. Februar 1998 (1998-02-10)

## Beschreibung

Die Erfindung betrifft silikatgebundene Materialien wie Beschichtungs-, Form-, Klebe- und Spachtelmaterialien unter Verwendung eines silikatischen Bindemittel. Die Erfindung betrifft weiterhin das Bindemittel selbst und ein Verfahren zu dessen Herstellung. Dieses Bindemittel wird erhalten aus Abmischungen von gelösten Kieselsolen und Alkalisilikaten mit einem speziellen Stabilisator.

Silikatische Materialien wie Beschichtungen werden seit dem 19. Jahrhundert vor allem als Anstriche für mineralische Untergründe eingesetzt. Diese sogenannten Silikatfarben zeichnen sich durch den Einsatz von kaliumsilikathaltigen Wassergläsern mit einem Molverhältnis von SiO₂ zu K₂O von 3,5 bis 4,5 zu 1 aus. Höhere Molverhältnisse scheitern durch die für im Bindemittel notwendigen Feststoffgehalte von mehr als 15 Gew.-% an der zu hohen Viskosität bzw. der Instabilität des wäßrigen Alkalisilikates. Nur mit Lithiumsilikaten sind bei hohen Feststoffgehalten höhere Molverhältnisse erhältlich. Der Einsatz von Lithiumsilikaten ist jedoch nicht wirtschaftlich.

Es ist bekannt, daß durch ein höheres Molverhältnis die Wasserlöslichkeit des silikatischen Bindemittels verringert wird. Dies gilt für die frischapplizierten Beschichtungsmassen, die ausgehärteten Beschichtungsmassen sowie für auf gleicher Bindemittelbasis hergestellten Formmassen. Die Folge ist, daß der Einsatz eines Bindemittels mit erhöhtem Molverhältnis zu einer besseren Frühwasserfestigkeit und zu einer geringeren Auslaugung der Beschichtung oder des Formkörpers führt. Solche Eigenschaften zeigen sich in der Bewitterung durch höhere Elutionen, einsetzende Kreidung und Erosion der mineralischen Beschichtung und des mineralischen Formkörpers. Von solchen Systemen wird daher gegenüber derzeitigen Systemen überlegene Witterungsbeständigkeit und vor allem geringere Kreidungsneigung erwartet.

Die bisherigen bekannten dispersionsfreien Beschichtungsmassen auf der Basis von Alkalisilikaten sind entweder 2-Komponentensysteme, bestehend aus einer flüssigen Alkalisilikatbindemittelkomponente und einer Pulverkomponente, welche gegenüber den Alkalisilikaten reaktive und diese aushärtende Bestandteile enthält, oder 1-Kompanentensysteme, enthaltend Alkalisilikate, insbesondere Kaliumsilikate. Die Bindemittel zeigen vor allem in der Aushärtungsphase eine relativ hohe Frühwasserunbeständigkeit. Sobald die Beschichtungen bzw. Formmassen ausgehärtet sind, führt der Alkaligehalt des Bindemittels zu einer Auslaugung des Bindematerials bei Anwesenheit von Wasser. Diese Auslaugung schwächt das Bindungsgefüge und führt dann in der Folge weiterer Bewitterungen zu den obengenannten Schäden. Als 1-Komponenten Silikatbeschichtungen werden oft auch Dispersionsilikatbeschichtungen bezeichnet. Dabei handelt es sich in der Regel um Beschichtungsysteme, die wasserdispergierbare organische Bindemittel wie z.B. Polyacrylate, Styrolacrylate und/oder Mischpolymerisate aus Acrylsäure, Styrol, Butadien etc. verwenden.

Insbesondere letztere Einkomponentensysteme erfüllen in der Regel bei geeigneter Formulierung die Anforderungen hinsichtlich guter Lagerstabilität, einfacher Verarbeitung und guter Witterungsbeständigkeit nach Beendigung des Abbindevorganges. Vor allem die Frühwasserfestigkeit ist gegenüber den oben erwähnten organodispersionsfreien Systemen verbessert.

Für Anwendungen, insbesondere bei Applikation im Außenbereich mit wechselhaften Witterungsbedingungen ist eine nochmals verbesserte Frühwasserfestigkeit und Auslaugbeständigkeit erwünscht.

Das gleiche gilt sinngemäß auch für Formmassen. Klebe- und Spachtelmassen.

Bekanntlich steigt die Frühwasserfestigkeit und Wasserresistenz von Alkalisilkatbeschichtungen und Formmassen mit steigendem Molverhältnis SiO₂ zu X₂O der Alkalisilkatkomponente. Jedoch ist es beispielsweise in herkömmlichen Flüssigsystemen von deckenden Farben, mit einem Bindemittelanteil von 20 bis 35 Gew.-% und einem angestrebten Silikatanteil von 5 bis 12 Gew.-%, bezogen auf die gebrauchsfertige Beschichtungsmasse, nicht möglich, ein Molverhältnis SiO₂ zu X₂O ( insbesondere SiO₂ zu K₂O) deutlich über 4,0 einzustellen, da bei weiterer Erhöhung des Molverhältnisses eine starke Viskositätszunahme bis hin zur Gelbildung der Farben erfolgt.

In der Praxis kann man durch den Einsatz von festen und kolloidalen Silikaten das Molverhältnis von SiO₂ zu X₂O (Alkalioxid) erhöhen. Dies geschieht durch Mischung dieser Verbindungen mit einem wäßrigen Alkalisilikat. Derartige Mischungen von Wasserglas und reaktiven Silikaten zeigen jedoch für den Einsatz als Beschichtungen eine kurze Topfzeit. Sie eignen sich nicht für die Verwendung als lagerfähige Beschichtungsmaterialien wie z.B. Putze und Farben. Dies konnte anhand eigener Versuche bestätigt werden. So zeigen Farben die nach dem Stand der Technik hergestellt werden bei 20 °C eine Gelierung innerhalb von wenigen Tagen. Farben, die ausschließlich Sole als Bindemittel enthalten und damit naturgemäß ein sehr hohes Molverhältnis SiO₂ zu Alkalioxid (größer als 25) enthalten, zeigen eine für die Anwendung in Beschichtungen und Formmassen zu geringe Bindekraft. Mit zunehmendem Anteil an Alkalioxid steigt die Bindekraft der genannten Abmischungen. In der Praxis sind Feststoffverhältnisse von kollodialem SiO₂ zu Alkalisilikat, von kleiner als 1,1 geeignet.

Die oben genannten Eigenschaften zeigen nicht nur die bisher beschriebenen gefüllten Systeme wie Beschichtungsmassen und sinngemäß auch die Formmassen, sondern auch die silikatischen Bindemittelabmischungen selbst.

Nicht stabilisierte wäßrige Abmischungen von Kieselsolen und Alkalisilikaten zeigen eine ungenügende Stabilität. Derartige Abmischungen gelieren innerhalb weniger Tage. Dies gilt vor allem für konzentriertere Bindemittelabmischungen die mehr als 10 Gew.-% Feststoff enthalten. Derartige konzentrierte Abmischungen sind für den Einsatz als Bindemittel aber notwendig, um das notwendige Bindevermögen zu erreichen.

Bei den für die Herstellung von Formkörpern, Klebeund Spachtelmassen sowie Beschichtungen im Bindemittel notwendigen Feststoffgehalten von mehr als 15 Gew.-% werden mit zunehmendem Feststoffgehalten auch zunehmend geringere Stabilitäten festgestellt. Die Folge davon ist, daß eine mit einem Kieselsol und Alkalisilikat hergestellte Farbe ohne organische Anteile innerhalb von wenigen Tagen stark andickt (Beispiel 4).

Derartige nicht lagerstabile, verdickte Farben lassen sich nicht mehr mit den üblichen Beschichtungswerkzeugen (Rolle, Pinsel, Spritzpistole) verarbeiten.

In R.K. Iler "The Chemistry of Silica" John Wiley & Sons New York 1979 Seite 145 werden - angeblich stabile - Mischungen von kolloidaler Kieselsäure und Kaliumsilikat mit einer Konzentration an SiO₂ von 15 bis 30 Gew.-% und Molverhältnissen von SiO₂:K₂O von 11 : 1 bis 24 : 1 beschrieben. Gemäß eigenen Untersuchungen zeigen jedoch Mischungen aus Kaliumsilikat und Kieselsol mit einem SiO₂-Gehalt von 20 bis 35 Gew.-% und berechneten Molverhältnissen SiO₂ zu K₂O zwischen 4,5 und 11,0 bei Raumtemperatur innerhalb von 9 bis 45 Tagen Gelbildung, was für eine Vermarktung als anwendungsfertige Produkte und für eine Lagerhaltung als Bindemittel für 2-Komponenten Produkte absolut unzureichend ist. Die genannten Molverhältnisse sind für die Eignung als Bindemittel für Beschichtungen und Formmassen notwendig, da das Bindevermögen der stabilisierten Abmischungen mit der Erhöhung des theoretischen Molverhältnisses abnimmt. Dies ist typisch für Farben.

Die DE 2837891 beschreibt eine Alkalisilikatbindemittelkombination mit einem Molverhältnis SiO₂ zu X₂O von etwa 4,8:1 bis 6,0 zu 1 mit einem Anteil von 1 bis 20 Gew.-% eines Silicons (wie z.B. Methylsilanol oder Methyltrimethoxysilans), welches aus einer Kaliumsilikatlösung, einem Siliziumhydrogel und Methyltrimethoxysilan unter Hydrolyse des letzteren hergestellt wird. Dieses Material dient unter anderem als Korrosionsschutzbeschichtung für Eisenmetalle und Aluminiumlegierungen oder auch als Anstrichmittel für hydraulische Bindemittel oder gegebenenfalls Holz.

Die Herstellung dieses Bindemittels ist aufwendig und aufgrund des feuchtigkeitsempfindlichen Methyltrimethoxysilanes auch nicht ungefährlich. Solche Monomeren reagieren mit den Silikaten des Wasserglases in einer Polykondensation. Solche Beschichtungsmittel sind nicht lagerstabil und gelieren in kurzer zeit. Die EP 0 842 910 A 2 beschreibt Bindemittel aus Wasserglas (Alkalisilikatlösung), insbesondere Natronwasserglas, und Kieselsol, welche miteinander vermischt als Bindemittel zur Herstellung von Formkörpern aus haufwerksporenbildenden und/oder granulatförmigen Materialien unter Erhitzen auf über 100 °C verwendet werden. Solche Mischungen sind zur Herstellung lagerstabiler Einkomponenten Beschichtungsmassen, Formmassen und dergleichen nicht geeignet. Außerdem sind Temperaturen von mehr als 100 °C für die Aushärtung des Bindemittels notwendig. Die WO 95/29139 beschreibt eine silikatische Masse und Beschichtung, die hergestellt wird aus einer Mischung von Wasserglas und Kieselsol. Diese Massen und Beschichtungen enthalten keine Stabilisatoren und zeigen im Versuch nach ihrer Herstellung eine Verarbeitungszeit von circa einer Stunde und sind somit auch nicht lagerstabil.

Die DE 194 31 15 A betrifft ein Mittel zum Verkleben von Gegenständen aus Kunststoff mit porösen Materialien.

Weiterhin ist aus CA Vol. 86, No. 24 vom 13.06.1977 No. 1760097 ein Binder für Zement-, Gips- oder keramische Produkte bekannt, der spezifische Stickstoffverbindungen wie Piperidin und Guanidin umfaßt.

Die CH 501 720 A betrifft ein Bindemittel auf der Basis von Alkalisilikat-Lösungen, es enthält jedoch keinerlei Hinweise auf spezifische Stickstoffverbindungen.

Aus JP 10 036 843 A ist ebenfalls ein Bindemittel auf Silikatbasis bekannt.

Ausgehend hiervon ist die Aufgabe der vorliegenden Erfindung, silikatgebundene Materialien, insbesondere Beschichtungs-, Form-, Klebe- und Spachtelmaterialien auf der Basis eines verbesserten silikatischen Bindemittels anzugeben, welche eine hohe Bindekraft und lange Stabilität gegen Gelierung aufweisen. Die Materialien sollten weiterhin eine erhöhte Frühwasserfestigkeiten und erhöhte Auslaugbeständigkeiten aufweisen. Aufgabe der Erfindung ist es weiterhin, ein silikatisches Bindemittel anzugeben, das dadurch gekennzeichnet ist, daß dieses bei geschlossener Lagerung in 20 °C nicht innerhalb von 30 Tagen geliert, sowie ein Verfahren zu dessen Herstellung.

Die Aufgabe wird in bezug auf die silikatischen Materialien durch die kennzeichnenden Merkmale des Patentanspruches 1 gelöst, in bezug auf das Bindemittel durch die kennzeichnenden Merkmale des Anspruches 15 und in bezug auf das Verfahren durch die Merkmale des Anspruches 20 gelöst. Die Unteransprüche zeigen vorteilhafte Weiterbildungen auf.

Erfindungsgemäß wird somit vorgeschlagen, diese Materialien, die ein Silikatbindemittel enthalten, dadurch weiterzubilden, daß das Silkatbindemittel wasserlösliche Silikate, Kieselsäure und als erfindungswesentliche Komponente mindestens eine wasserlösliche organische Stickstoffverbindung als Stabilisator enthält. Erfindungsgemäß enthält dabei das Bindemittel, jeweils gerechnet als Trockensubstanz, 2,5 bis 50 Gew.-% wasserlösliche Silikate, 1,0 bis 30 Gew.-% Kieselsäure und 0,05 bis 30 Gew.-% Stabilisator. Bevorzugt enthält das Bindemittel 15 bis 35 Gew.-% wasserlösliches Silikat, 3 bis 10 Gew.-% Kieselsäure und 0,1 bis 10 Gew.-% Stabilisator.

Als kationische organische Stickstoffverbindungen enthält das Bidemittel N,N,N',N'-Tetraalkyl-N,N'-bishydroxyalkyl-α,ω-alkylendiammonium-Verbindungen.

Überraschend wurde gefunden, daß man die vorstehend erwähnten Materialien mit verbesserter Frühwasserbeständigkeit und Wasserauslagerungsresistenz erhalten kann, wenn man als Silikatbindemittel eine Kombination aus Kaliumsilikatlösung und Siliciumdioxidhydrosol mit geringen Anteilen eines Stabilisators, auf Basis wasserlöslicher kationischer organischer Stickstoffverbindungen verwendet.

Silikatlösungen können z.B. handelsübliche Produkte mit einem Feststoffgehalt zwischen 2,5 und 50 %, bevorzugt 25 und 40 % und einem Molverhältnis SiO₂ : K₂O und/oder Na₂O zwischen 2,0 : 1 und 5,0 : 1 verwendet werden. Die Kalium- und/oder Natriumsilikate können auch ganz oder teilweise durch Lithiumsilikat ersetzt werden.

Als Siliciumdioxidhydrosole können handelsübliche Kieselsole mit einem Feststoffgehalt von mindestens 10 Gew.-%, bevorzugt mit einem SiO₂-Gehalt von 10 bis 60 %, besonders bevorzugt 25 bis 40 % und Teilchengrößen zwischen 5 und 100 nm, bevorzugt 5 bis 35 nm verwendet werden.

Die erfindungsgemäßen Materialien können selbstverständlich, neben dem Bindemittel, wie vorstehend definiert, an und für sich bekannte Füllstoffe und/oder Pigmente und/oder Additive enthalten.

Der Anteil des Bindemittels und/oder des Füllstoffes in den Materialien richtet sich nach dem Material selbst und nach den Anforderungen. Generell ist es möglich, daß die Materialien 1 bis 95 Gew.-% Bindemittel und 95 bis 1 Gew.-% Füllstoff enthalten. Die mengenmäßige Auswahl obliegt hier dem Fachmann. Je nachdem ob es sich um ein Beschichtungsmaterial, d.h. um einen Beschichtungsstoff, eine Formmasse, eine Klebemasse oder um eine Spachtelmasse handelt, werden die entsprechenden Mengen Füllstoff ausgewählt. Beispiele für Füllstoffe sind: Quarzite, Dolomite, Calcite, Schichtsilikate, Vulkanite, Faserstoffe, Kieselerden wie z.B. Kieselgur und Diatomeenerden, reaktive Füllstoffe, die Verbindungen wie Zink, Calcium, Strontium, Aluminium, Magnesium, Barium, Zirkon, Eisen, Titan, Phosphor und Bor enthalten. Selbstverständlich können auch entsprechende Mischungen dieser Füllstoffe eingesetzt werden.

Je nach Anforderung können in den Materialien neben den Bindemitteln auch 0,0001 bis 90 Gew.-% Pigment und/oder Farbstoff enthalten sein. Die gewichtsmäßige Auswahl des Pigmentes bzw. Farbstoffes wird wieder nach dem Anwendungsfall getroffen. Beispiele für Pigmente oder Farbstoffe, die für die Materialien nach der Erfindung geeignet sind, sind synthetische und natürliche anorganische Pigmente oder Farbstoffe sowie gegebenenfalls organische Pigmente oder Farbstoffe und deren Mischungen.

Erfindungsgemäß kann in dem Material neben 1 bis 95 Gew.-% Füllstoff und dem Bindemittel (1 bis 99,999 Gew.-%) auch 0,0001 bis 90 Gew.-% Pigment und/oder Farbstoff enthalten sein.

Die Materialien nach der Erfindung können selbstverständlich auch die aus dem Stand der Technik bekannten Additive enthalten. Derartige Additive können sein Netz- und/oder Dispergiermittel und/oder Hydrophobierungsmittel und/oder Entschäumer und/oder Lösemittel und/oder Verdicker und/oder Emulgatoren.

Die Herstellung der erfindungsgemäßen Materialien erfolgt nach herkömmlicher Technologie durch Vermischen und Homogenisieren der Bestandteile, üblicherweise bei Raumtemperatur unter Normaldruck.

Die Reihenfolge der Zugabe der Einzelkomponenten ist von untergeordneter Bedeutung, kann jedoch ebenso wie die Mischintensität im Einzelfall das Resultat beeinflussen.

Bei dem Fachmann vertrauter optimierter Formulierung und Produktion sind die erfindungsgemäßen Materialien (z.B. Farben, Putze etc.) bei Lagerung zwischen +10 und 35 °C mindestens 1 Monat lagerstabil.

Die Anwendung kann für Beschichtungsmaterialien mit üblichen Methoden für mineralische Beschichtungsmassen erfolgen, so z.B. durch Aufstreichung, Aufrollen, Spritzen, Kellenauftrag und dgl. Gegenüber herkömmlichen Silikatbeschichtungsmassen weisen die erhaltenen Beschichtungen ein rascheres Abbindeverhalten und somit bessere Frühwasserfestigkeit und Wasserauslaugbeständigkeit auf.

Die Erfindung betrifft weiterhin Bindemittel (Anspruch 15), die wasserlösliche Silikate, Kieselsäure und eine wasserlösliche organische Stickstoffverbindung als Stabilisator enthält. Die stoffliche und mengenmäßige Zusammensetzung des Bindemittels entspricht der vorstehend bei den Materialien beschriebenen Zusammensetzung des dort angewendeten Bindemittels.

Auf die diesbezügliche Offenbarung wird deshalb Bezug genommen.

Beim Bindemittel ist besonders hervorzuheben, daß von den Erfindern gefunden wurde, daß eine Bindemittelformulierung enthaltend die wasserlöslichen Silikate in Form einer wäßrigen Lösung mit den Merkmalen des Anspruches 17 und die Kieselsäure in Form eines wasserhaltigen Siliciumdioxidsols nach Anspruch 19 in Kombination mit geringen Mengen des Stabilisators (0,1 bis 30 Gew.-%, bevorzugt 0,2 bis 10 Gew.-%) besonders lagerstabil ist.

Dadurch ist es möglich, das Bindemittel in Form einer Vormischung bereitzustellen und dieses Bindemittel dann erst vor Ort, d.h. beim Einsatz mit den entsprechenden Pigmenten und/oder Additiven und/oder Füllstoffen, falls erforderlich, zu mischen. Auch ist es möglich, daß zuerst eine Vormischung aus wasserlöslichen Silikaten und Siliciumdioxidsolen hergestellt wird und daß dann der Stabilisator nachträglich zugegeben wird.

Die Erfindung wird nachfolgend anhand von mehreren Ausführungsbeispielen näher erläutert.

### Beispiel 1 (Vergleichsbeispiel): Silikatbindemittel

Aus 50 Gew.-% Kaliumwasserglas (20,5 % SiO₂ und 8,2 % K₂O) und 50 Teilen eines 30 %igen Kieselsols wird unter Rühren eine Mischung hergestellt, welche ein berechnetes Molverhältnis SiO₂:K₂O = 9,3 aufweist.

Die zunächst dünnflüssige Mischung (Auslaufzeit bei 20 °C / Fordbecher / Düse 4 mm:17 sec) bildet bei 20 - 23 °C nach 35 Tagen ein festes Gel.

### Beispiel 2: Silikatbindemittel

Zu einer gemäß Beispiel 1 hergestellten Mischung werden, bezogen auf die fertige Ausgangsmischung, 2,0 Gew.-% einer 63 %igen wäßrigen Lösung von N, N, N', N' Tetramethyl - N, N'-bis-(hydroxypropyl)- 1,2 - ethylendiammonium - dichlorid homogen zugemischt.

Die dünnflüssige Mischung (Auslaufzeit bei 20 °C / Fordbecher / Düse 4 mm:11 sec.) wird bei 20 - 23 °C gelagert und ist noch nach 131 Tagen stabil und dünnflüssig (Auslaufzeit bei 20 °C / Fordbecher / Düse 4 mm:14 sec).

### Beispiel 3: Silikatbindemittel

Zu einer gemäß Beispiel 1 hergestellten Mischung wurden, bezogen auf die fertige Ausgangsmischung, 2,0 Gew.-% einer 45 %igen wäßrigen Lösung von N, N, N', N'- Tetramethyl - N, N'-bis-hydroxyethyl - 1,3-propylendiammonium-dihydroxid homogen zugemischt.

Die dünnflüssige Mischung (Auslaufzeit bei 20 ° C / Fordbecher / Düse 4 mm:13 sec) wird bei 20 - 23 °C gelagert und ist noch nach 108 Tagen stabil und dünnflüssig (Auslaufzeit bei 20 °C / Fordbecher / Düse 4 mm:13 sec).

### 4. Vergleichsbeispiel

Eine Silikatfarbe wird mit folgenden Einwaagen hergestellt:
96,1 g Wasser; 2,3 g Verdicker vom Typ Tylose H 10000 P2 der Firma Hoechst AG; 0,1 g Kalilauge (20 %) ; 0,85 g Netz- und Dispergiermittel Triton 405 der Firma Klöckner; 0,5 g Coatex BR3 der Firma Coatex; 150,0 g Füllstoff vom Typ Sibelite Mehl 010 der Firma Sibelco; 0,5 g Konservierungsmittel vom Typ Aciticid BX der Firma Thor; 1,25 g Entschäumer vom Typ Agitan 260 der Firma Münzing; 40,0 g Füllstoff vom Typ Glimmer MU - N75R der Firma Ziegler; 10,0 g Hydrophobierungsmittel vom Typ Contraquin MS14W der Firma Hüls; 20,0 g Füllstoff vom Typ Clarcel DIF-D der Firma Elf-Atochem; 270,7 g Wasserglas vom Typ Betolin K28 der Firma Woellner; 50,0 g Pigment vom Typ Tiona RL68 der Firma Millenium; 130,0 g Füllstoff vom Typ Siliplast 910 der Firma gfr; 150,0 g Füllstoff vom Typ BLP-2 der Firma Omya;
67,7 g Kieselsol vom Typ Klebosol 30 N12 der Firma Hoechst AG.
Zusätzlich wurden in diese Mischung 10,0 g Wasser eingearbeitet.
Die Herstellung der Farbe erfolgte innerhalb von 30 min. am Dissolver bei circa 1500 U/min. Die Zugabe erfolgte in der oben genannten Reihenfolge. Die Zugabe von Extrawasser erfolgt vor der Kieselsolzugabe.

### 5. Ausführungsbeispiel:

Alternativ wie die Farbe aus Ausführungsbeispiel 4, aber statt der letzten Zugabeposition von 10,0 g Wasser werden als Stabilisator 10,0 g einer 35 % wäßrigen Lösung von N,N,N',N'-Tetramethyl-N,N'-bis-(hydroxypropyl)-1,6-hexamethylendiammonium-dihydroxid homogen zugemischt.

Die Herstellung der Farbe erfolgte innerhalb von 30 min. am Dissolver bei circa 1500 U/min. Die Zugabe erfolgte in der oben genannten Reihenfolge. Die Zugabe von Stabilisator erfolgt vor der Kieselsolzugabe.

### 6. Ausführungsbeispiel:

100 g der im Beispiel 5 hergestellten Farbe werden mit 50 g, Füllstoff vom Typ Sibelite Mehl 010 versetzt und homogenisiert. Danach wird die entstandene Formmasse in eine PE oder PP - Negativform gefüllt und auf der Rückseite glattgezogen. Die Formmasse härtet über mehrere Tage bei Raumtemperatur aus. Sobald die Formmasse eine Festigkeit erreicht, die der von Keramiken ähnlich ist, läßt sich die Masse problemlos aus der Form nehmen.

### 7. Anwendungsbeispiel:

Ein Silikatputz wird gemäß der folgenden Rezeptur hergestellt:
8,4 g Wasser; 0,2 g Verdicker vom Typ Tylose H 10000 P2 der Firma Hoechst; 0,1 g Kalilauge (20%); 0,5 g Netz- und Dispergiermittel vom Typ Sapetin D20 der Firma Woellner; 2,0 g Pigment vom Typ Tiona RL 68 der Firma Millenium; 0,3 g Faser vom Typ Polypropylen Kurzschnitt 2,2 dtex der Firma Ziegler; 1,0 g Füllstoff vom Typ Celite 281 der Firma Lehmann & Voss; 1,0 g Füllstoff vom Typ Glimmer MUN 450 der Firma Ziegler; 1,0 g Hydrophobierungsmittel vom Typ Contraquin NS 14W der Firma Hüls; 11,9 g Wasserglas vom Typ Betolin K28 der Firma Woellner; 1,0 g Verdickersuspension aus Bentone CT in Wasser (10 %) mit Bentone CT der Firma Rheox; 5,0 g Füllstoff vom Typ Siliplast 910 der Firma gfr; 20,0 g Füllstoff vom Typ Carolith 0-0,2 FB der Firma Omya; 1,0 g Füllstoff vom Typ Granomar 0,7 S der Firma Ziegler; 0,5 g Stabilisator vom Typ N,N,N',N'- Tetramethyl - N,N'bis-(hydroxypropyl)-1,6-hexamethylendiammonium-dihydroxid 35% in Wasser gelöst; 2,9 g Kieselsol vom Typ Klebosol 30N12 der Firma Hoechst; 34,0 g Füllstoff vom Typ Omyacarb 130 der Firma Omya.

Die Rohstoffe werden in der angegebenen Reihenfolge am Dissolver bei circa 1500 U/min. innerhalb einer halben Stunde verarbeitet. Die entstandene Putzmasse wird anschließend mit der Putzscheibe auf eine grundierte Faserzementplatte appliziert.

### 8. Vergleichsbeispiel

Eine Silikatfarbe wird mit folgenden Einwaagen hergestellt:
124,5 g Wasser; 2,3 g Verdicker vom Typ Tylose H 10000 P2 der Firma Hoechst AG; 0,1 g Kalilauge (20 %); 0,85 g Netz- und Dispergiermittel Triton 405 der Firma Klöckner; 0,5 g Coatex BR3 der Firma Coatex; 150,0 g Füllstoff vom Typ Sibelite Mehl 010 der Firma Sibelco; 0,5 g Konservierungsmittel vom Typ Acticid BX der Firma Thor; 1,25 g Entschäumer vom Typ Agitan 260 der Firma Münzing; 40,0 g Füllstoff vom Typ Glimmer MU-N75 R der Firma Ziegler; 10,0 g Hydrophobierungsmittel vom Typ Contraquin NS 14 W der Firma Hüls; 20,0 g Füllstoff vom Typ Clarcel DIF-D der Firma Elf-Atochem; 310,0 g Wasserglas vom Typ Betolin K35 der Firma Woellner; 50,0 g Pigment vom Typ Tiona RL68 der Firma Millenium; 130,0 g Füllstoff Siliplast 910 der Firma gfr; 150,0 g Füllstoff vom Typ BLP-2 der Firma Omya.

Abschließend wurden in diese Mischung 10,0 g Wasser eingearbeitet.

Die Herstellung der Farbe erfolgte innerhalb von 30 min. am Dissolver bei circa 1500 U/min. Die Zugabe erfolgte in der oben genannten Reihenfolge.

Ergebnisse der vergleichenden Prüfungen zu den Ausführungsbeispielen 4, 5 und 8:
Meßgrößen und Testbedingungen zur Beurteilung der Farben der Beispiele 4 und 5 und 8:
Lagerverhalten bei 40 °C im geschlossenen System:
Geringfügige Erhöhung der Viskosität innerhalb von 30d in Ausführungsbeispiel 5 um den Faktor 1,8. Sehr starke Erhöhung der Viskosität innerhalb von 30d in Ausführungsbeispiel 4 um einen Faktor >>20 (Probe fest und nicht aufrührbar - Viskositätsmessung nicht möglich). Erhöhung der Viskosität innerhalb von 30d in Ausführungsbeispiel 8 um den Faktor 6, 7.

Lagerverhalten bei 40 °C im geschlossenen System aber mit jeweils zu den festgesetzten Meßdatum, infolge der Meßbedingungen, aufgerührten Farben:
Erhöhung der Viskosität von Ausführungsbeispiel 5 um den Faktor:
0,9 (nach 7 Tagen), 1,8 (nach 14 Tagen), 2,1 (nach 21 Tagen)
Erhöhung der Viskosität von Ausführungsbeispiel 4 um den Faktor:
2,6 (nach 7 Tagen), 6,9 (nach 14 Tagen), Probe fast fest und schwer meßbar (nach 21 Tagen),
Erhöhung der Viskosität von Ausführungsbeispiel 8 um den Faktor:
2,9 (nach 7 Tagen), 6,5 (nach 14 Tagen), 8,7 (nach 21 Tagen)

Auslaugprüfung von 7d und 14d im Normklima (50 % rel. Feuchte/20 °C) offen gehärteten Farbscheiben (15 g) in 100 g destillierten Wasser. Bestimmte Gewichtsverluste:
Von Ausführungsbeispiel 5:8,9 Gew.-% (Probe maßhaltig)
Von Ausführungsbeispiel 4:6,7 Gew.-% (Probe maßhaltig)
Von Ausführungsbeispiel 8: 18,4 Gew.-% (Probe zerfallen)

Prüfung der Frühwasserfestigkeiten auf einer mit Betolin K28 + Wasser (3:1) grundierten Faserzementplatte, die je zweimal mit den Beschichtungen aus den Ausführungsbeispielen gestrichen wurde. Die Wasserbelastung erfolgte nach 10 min, 20 min, 30 min, 50 min Trocknung des Zweitanstriches mit nachfolgender visueller Beurteilung.

Beurteilung für Ausführungsbeispiel 5: gut Beurteilung für Ausführungsbeispiel 4: sehr gut Beurteilung für Ausführungsbeispiel 8: mangelhaft

## Patentansprüche

1. Silikatgebundene Materialien, insbesondere Beschichtungs-, Form-,Klebe- und Spachtelmaterial mit einem Silikatbindemittel und ggf. Füllstoffen und/oder Pigmenten und/oder Additiven,
**dadurch gekennzeichnet,**
**daß** das Silikatbindemittel, jeweils gerechnet als Trockensubstanz 2,5 bis 50 Gew.% wasserlösliches Silikat, 1,0 bis 30 Gew.% Kieselsäure und 0,05 bis 30 Gew.% eines Stabilisators enthält, wobei der Stabilisator ausgewählt ist aus organischen Stickstoffverbindungen aus der Klasse der N,N,N',N'-Tetraalkyl-N,N'-bishydroxyalkyl-α,ω-alkylendiammonium-Verbindungen.

2. Materialien nach Anspruch 1,
**dadurch gekennzeichnet, daß** das Bindemittel 10 bis 35 Gew.-% wasserlösliches Silikat, 3,0 bis 10 Gew.-% Kieselsäure und 0,1 bis 10 Gew.-% Stabilisator enthält.

3. Materialien nach Anspruch 1 oder 2,
**dadurch gekennzeichnet, daß** das wasserlösliche Silikat in Form einer wäßrigen Lösung oder einer Abmischung von Kalium- und/oder Natriumsilikat mit einem Feststoffgehalt von 2,5 bis 50 Gew.% und einem Molverhältnis SiO₂ zu K₂O und/oder Na₂O von 2,0:1 bis 5,0 :1 vorliegt.

4. Materialien nach Anspruch 3,
**dadurch gekennzeichnet, daß** das Kaliumsilikat und/oder Natriumsilikat ganz oder teilweise durch Lithiumsilikat ersetzt ist.

5. Materialien nach mindestens einem der Ansprüche 1 bis 4,
**dadurch gekennzeichnet, daß** die Kieselsäure in Form eines wasserhaltigen Siliciumdioxidsols mit einem Feststoffgehalt von mindestens 10 Gew.% vorliegt.

6. Materialien nach Anspruch 5,
**dadurch gekennzeichnet, daß** das Siliciumdioxidhydrosol ein Kieselsol mit einem SiO₂-Gehalt von 10 bis 60 Gew.% und einem mittleren Teilchendurchmesser von 5 bis 100 nm ist.

7. Materialien nach mindestens einem der Ansprüche 1 bis 6,
**dadurch gekennzeichnet, daß** sie 1 bis 95 Gew.% Bindemittel und 1 bis 95 Gew.-% Füllstoffe enthalten.

8. Materialien nach mindestens einem der Ansprüche 1 bis 7,
**dadurch gekennzeichnet, daß** sie 1 bis 99,9999 Gew.% Bindemittel und 0,0001 bis 90 Gew.% Pigment und/oder Farbatoff enthalten.

9. Materialien nach mindestens einem der Ansprüche 1 bis 8,
**dadurch gekennzeichnet, daß** sie 1 bis zu 95 Gew.% Füllstoff, 1 bis 99,9999 Gew.% Bindemittel und 0,0001 bis 90 Gew.-% Pigment und/oder Farbstoff enthalten.

10. Materialien nach einem der Ansprüche 1 bis 9,
**dadurch gekennzeichnet, daß** sie zusätzlich Additive aus der Klasse der Netz- und/oder Dispergiermittel und/oder Hydrophobierungsmittel und/oder Entschäumer und/oder Lösemittel und/oder Verdicker und/oder Emulgatoren enthalten.

11. Materialien nach mindestens einem der Ansprüche 7 bis 10,
**dadurch gekennzeichnet, daß** der Füllstoff ausgewählt ist aus der Klasse der Quarzite, Dolomite, Calcite, Schichtsilikate, Vulkanite, Faserstoffe, Kieselerde wie z.B. Kieselgur und Diatomeenerden sowie reaktiven Füllstoffe die Verbindungen des Zink, Calcium, Strontium, Aluminium, Magnesium, Barium, Zirkon, Eisen, Titan, Phosphor, Bor und/oder deren Mischungen enthalten.

12. Materialien nach mindestens einem der Ansprüche 7 bis 11,
**dadurch gekennzeichnet, daß** das Pigment oder der Farbatoff ausgewählt ist aus synthetischen und natürlichen anorganischen Pigmenten oder Farbstoffen sowie gegebenenfalls auch organischen Pigmenten oder Farbstoffen und/oder deren Mischungen.

13. Materialien nach mindestens einem der Ansprüche 1 bis 12,
**dadurch gekennzeichnet, daß** das Bindemittel, bezogen auf das Gesamtbindemittel, zusätzlich wasserdispergierbare bzw. wasserlösliche organische Bindemittel in Mengen von 0,1 bis 80 Gew.% enthält.

14. Materialien nach Anspruch 13,
**dadurch gekennzeichnet, daß** die zusätzlichen wasserdispergierbaren organischen Bindemittel ausgewählt sind aus der Klasse der Polyacrylate, Styrolacrylate, Acrylatmischpolymere, Vinylacetat, Polyurethandispersionen und Silikonharze und/oder deren Mischungen.

15. Bindemittel, enthaltend wasserlösliche Silikate und Kieselsäure zur Herstellung von silikatgebundenen Materialien, insbesondere Beschichtungs-, Form-, Klebe- und Spachtelmaterialien,
**dadurch gekennzeichnet, daß** das Bindemittel, jeweils gerechnet als Trockensubstanz 2,5 bis 50 Gew % wasserlösliches Silikat, 1,0 bis 30 Gew.% Kieselsäure und 0,05 bis 30 Gew.% Stabilisator enthält, wobei der Stabilisator ausgewählt ist aus organischen Stickstoffverbindungen aus der Klasse N,N,N',N'-Tetraalkyl-N,N'-bishydroxyalkyl-α,ω-alkylendiammonium-Verbindungen.

16. Bindemittel nach Anspruch 15,
**dadurch gekennzeichnet, daß** das Bindemittel 15 bis 35 Gew.% wasserlösliches Silikat, 3,0 bis 10 Gew.% Kieselsaure und 0,1 bis 10 Gew.% Stabilisator enthält.

17. Bindemittel nach Anspruch 15,
**dadurch gekennzeichnet, daß** das wasserlösliche Silikat in Form einer wäßrigen Lösung oder einer Abmischung von Kalium- und/oder Natriumsilikaten mit einem Feststoffgehalt von 2,5 bis 50 Gew.% und einem Molverhältnis SiO₂ zu K₂O und/oder Na₂O von 2,0:1 bis 5,0 :1 vorliegt.

18. Bindemittel nach einem der Ansprüche 15 bis 17,
**dadurch gekennzeichnet, daß** das Kaliumsilikat und/oder Natriumsilikat ganz oder teilweise durch Lithiumsilikat ersetzt ist.

19. Bindemittel nach Anspruch 18,
**dadurch gekennzeichnet, daß** die Kieselsäure in Form eines Siliciumdioxidhydrosols mit einem SiO₂-Gehalt von 10 bis 60 Gew.% und einem mittleren Teilchendurchmesser von 5 bis 100 nm enthalten ist.

20. Verfahren zur Herstellung von Bindemitteln nach mindestens einem der Ansprüche 15 bis 19,
**dadurch gekennzeichnet, daß** zuerst eine Vormischung aus den wasserlöslichen Silikaten und der Kieselsäure hergestellt wird und dann anschließend die wasserlöslichen organischen Stickstoffverbindungen als Stabilisator zugesetzt werden.

## Claims

1. Silicate-bound materials, in particular coating, moulding, adhesive and filling materials, comprising a silicate binder and, optionally, fillers and/or pigments and/or additives, **characterised in that** the silicate binder contains, in each case calculated as dry substance, 2.5 to 50 wt.% of water-soluble silicate, 1.0 to 30 wt.% of silicic acid and 0.05 to 30 wt.% of a stabiliser, the stabiliser being selected from organic nitrogen compounds from the class of N,N,N',N'-tetraalkyl-N,N'-bishydroxyalkyl-α,ω-alkylenediammonium compounds.

2. , Materials according to claim 1, **characterised in that** the binder contains 10 to 35 wt.% of water-soluble silicate, 3.0 to 10 wt.% of silicic acid and 0.1 to 10 wt.% of stabiliser.

3. Materials. according to claim 1 or 2, **characterised in that** the . water-soluble silicate is present in the form of an aqueous solution or a mixture of potassium and/or sodium silicate with a solids content of 2.5 to 50 wt.% and a molar ratio of SiO₂ to K₂O and/or Na₂O of 2.0 : 1 to 5.0 : 1.

4. Materials according to claim 3, **characterised in that** the potassium silicate and/or sodium silicate is wholly or partly replaced by lithium silicate.

5. Materials according to at least one of claims 1 to 4, **characterised in that** the silicic acid is present in the form of a hydrous silicon dioxide sol with a solids content of at least 10 wt.%.

6. Materials according to claim 5, **characterised in that** the silicon dioxide hydrosol is a silica sol with a SiO₂ content of 10 to 60 wt.% and an average particle diameter of 5 to 100 nm.

7. Materials according to at least one of claims 1 to 6, **characterised in that** they contain 1 to 95 wt.% of binder and 1 to 95 wt.% of fillers.

8. Materials according to at least one of claims 1 to 7, **characterised in that** they contain 1 to 99.9999 wt.% of binder and 0.0001 to 90 wt.% of pigment and/or dyestuff.

9. Materials according to at least one of claims 1 to 8, **characterised in that** they contain 1 to 95 wt.% of filler, 1 to 99.9999 wt.% of binder and 0.0001 to 90 wt.% of pigment and/or dyestuff.

10. Materials according to any one of claims 1 to 9, **characterised in that** they additionally contain additives from the class comprising wetting agents and/or dispersants and/or hydrophobing agents and/or defoaming agents and/or solvents and/or thickeners and/or emulsifiers.

11. Materials according to at least one of claims 7 to 10, **characterised in that** the filler is selected from the class comprising quartzites, dolomites, calcites, phyllosilicates, vulcanites, fibrous materials, silicas such as kieselguhr and diatomaceous earths, and also reactive fillers containing compounds of zinc, calcium, strontium, aluminium, magnesium, barium, zirconium, iron, titanium, phosphorus, boron and/or mixtures thereof.

12. Materials according to at least one of claims 7 to 11, **characterised in that** the pigment or the dyestuff is selected from synthetic and natural inorganic pigments or dyestuffs and optionally also organic pigments or dyestuffs and/or mixtures thereof.

13. Materials according to at least one of claims 1 to 12, **characterised in that** the binder, based on the total binder, additionally contains water-dispersible or water-soluble organic binders in amounts of 0.1 to 80 wt.%.

14. Materials according to claim 13, **characterised in that** the additional water-dispersible organic binders are selected from the class comprising polyacrylates, styrene acrylates, acrylate copolymers, vinyl acetate, polyurethane dispersions and silicone resins and/or mixtures thereof.

15. A binder containing water-soluble silicates and silicic acid for the preparation of silicate-bound materials, in particular coating, moulding, adhesive and filling materials, **characterised in that** the binder contains, in each case calculated as dry substance, 2.5 to 50 wt.% of water-soluble silicate, 1.0 to 30 wt.% of silicic acid and 0.05 to 30 wt.% of stabiliser, the stabiliser being selected from organic nitrogen compounds from the class of N,N,N',N'-tetraalkyl-N,N'-bishydroxyalkyl-α,ω-alkylenediammonium compounds.

16. A binder according to claim 15, **characterised in that** the binder contains 15 to 35 wt.% of of water-soluble silicate, 3.0 to 10 wt.% of silicic acid and 0.1 to 1 wt.% of stabiliser.

17. A binder according to claim 15, **characterised in that** the water-soluble silicate is present in the form of an aqueous solution or a mixture of potassium and/or sodium silicates with a solids content of 2.5 to 50 wt.% and a molar ratio of SiO₂ to K₂O and/or Na₂O of 2.0 : 1 to 5.0 : 1.

18. A binder according to any one of claims 15 to 17, **characterised in that** the potassium silicate and/or sodium silicate is wholly or partly replaced by lithium silicate.

19. A binder according claim 18, **characterised in that** the silicic acid is contained in the form of a silicon dioxide hydrosol with a SiO₂ content of 10 to 60 wt.% and an average particle diameter of 5 to 100 nm.

20. A process for the preparation of binders according to at least one of claims 15 to 19, **characterised in that** first an initial mixture of the water-soluble silicates and the silicic acid is prepared and then the water-soluble organic nitrogen compounds are added as stabiliser.

## Revendications

1. Matériaux liés par du silicate, en particulier des matériaux de revêtement, moulables, adhésifs et mastics avec un liant silicate et le cas échéant, des charges et/ou pigments et/ou additifs, **caractérisés en ce que** le liant silicate contient, chaque fois calculé comme une substance sèche, 2,5 à 50% en poids de silicate soluble dans l'eau, 1,0 à 30% en poids d'acide silicique et 0,05 à 30% en poids d'un stabilisant, où le stabilisant est choisi parmi des composés azotés organiques de la classe des composés N,N,N',N'-tétraalkyl-N,N'-bishydroxyalkyl-α,ω-alkylènediammonium.

2. Matériaux selon la revendication 1, **caractérisés en ce que** le liant contient 10 à 35% en poids de silicate soluble dans l'eau, 3,0 à 10% en poids d'acide silicique et 0,1 à 10% en poids d'un stabilisant.

3. Matériaux selon la revendication 1 ou 2, **caractérisés en ce que** le silicate soluble dans l'eau est présent sous la forme d'une solution aqueuse ou d'un mélange de silicate de potassium et/ou de sodium avec une teneur en matière solide allant de 2,5 à 50% en poids et un rapport molaire SiO₂ à K₂O et/ou Na₂O allant de 2,0:1 à 5,0:1.

4. Matériaux selon la revendication 3, **caractérisés en ce. que** le silicate de potassium et/ou le silicate de sodium est remplacé partiellement ou complètement par du silicate de lithium.

5. Matériaux selon au moins l'une des revendications 1 à 4, **caractérisés en ce que** l'acide silicique est présent sous la forme d'un sol de dioxyde de silicium aqueux avec une teneur en matière solide d'au moins 10% en poids.

6. Matériaux selon la revendication 5, **caractérisés en ce que** le l'hydrosol de dioxyde de silicium est un sol de silice avec une teneur en SiO₂ allant de 10 à 60% en poids d'un diamètre moyen des particules allant de 5 à 100 nm.

7. Matériaux selon au moins l'une des revendications 1 à 6, **caractérisés en ce qu'**ils contiennent 1 à 95% en poids de liant et 1 à 95% en poids de charge.

8. Matériaux selon au moins l'une des revendications 1 à 7, **caractérisés en ce qu'**ils contiennent 1 à 99,9999% en poids de liant et 0,0001 à 90% en poids de pigment et/ou colorant.

9. Matériaux selon au moins l'une des revendications 1 à 8, **caractérisés en ce qu'**ils contiennent 1 à 95% en poids de charge, 1 à 99,9999% en poids de liant et 0,0001 à 90% en poids de pigment et/ou de colorant.

10. Matériaux selon au moins l'une des revendications 1 à 9, **caractérisés en ce qu'**ils contiennent des additifs supplémentaires de la classe des agents mouillants et/ou dispersants et/ou des agent rendant hydrophobe et/ou des agents antimousse et/ou des solvants et/ou des épaississants et/ou des émulsionnants.

11. Matériaux selon au moins l'une des revendications 7 à 10, **caractérisés en ce que** la charge est choisie parmi la classe de la quartzite, la dolomite, la calcite, les phyllosilicates, la vulcanite, les fibres, la silice comme par exemple la terre d'infusoires et la terre de diatomées, ainsi que des charges réactives, les composés du zinc, du calcium, du strontium, de l'aluminium, du magnésium, du baryum, du zirconium, du fer, du titane, du phosphore, du bore et/ou de leurs mélanges.

12. Matériaux selon au moins l'une des revendications 7 à 11, **caractérisés en ce que** le pigment ou le colorant est choisi parmi les pigments ou colorants inorganiques synthétiques et naturels, ainsi que le cas échéant, les pigments ou colorants organiques et/ou leurs mélanges.

13. Matériaux selon au moins l'une des revendications 1 à 12, **caractérisés en ce que** le liant contient, sur base du liant total, en outré, un liant organique dispersible dans l'eau ou soluble dans l'eau en des quantités allant de 0,1 à 80% en poids.

14. Matériaux, selon la revendication 13, **caractérisés en ce que** les liants organiques dispersibles dans l'eau, supplémentaires sont choisis parmi la classe des polyacrylate, acrylate de styrène, copolymères d'acrylate, acétate de vinyle, dispersions de polyuréthanne et résine de silicone et/ou leurs mélanges.

15. Liant contenant un silicate soluble dans l'eau et de l'acide silicique pour la préparation de matériaux liés par un silicate, en particulier des matériaux de revêtement, moulables, adhésifs et mastics, **caractérisé en ce que** le liant contient, chaque fois calculé comme une substance sèche, 2,5 à 50% en poids de silicate soluble dans l'eau, 1,0 à 30% en poids d'acide silicique et 0,05 à 30% en poids d'un stabilisant, où le stabilisant est choisi parmi des composés azotés organiques de la classe des composés N,N,N',N'-tétraalkyl-N,N'-bishydroxyalkyl-α,ω-alkylène-diammonium.

16. Liant selon la revendication 15, **caractérisé en ce que** le liant contient 15 à 35% en poids de silicate soluble dans l'eau, 3,0 à 10% en poids d'acide silicique et 0,1 à 10% en poids d'un stabilisant.

17. Liant selon la revendication 15, **caractérisé en ce que** le silicate soluble dans l'eau est présent sous la forme d'une solution aqueuse ou d'un mélange de silicate de potassium et/ou de sodium avec une teneur en matière solide allant de 2,5 à 50% en poids et un rapport molaire SiO₂ à K₂O et/ou Na₂O allant de 2,0:1 à 5,0:1.

18. Liant selon l'une des revendications 15 à 17, **caractérisé en ce que** le silicate de potassium et/ou le silicate de sodium est remplacé partiellement ou complètement par du silicate de lithium.

19. Liant selon la revendication 18, **caractérisés en ce que** l'acide silicique est présent sous la forme d'un hydrosol de dioxyde de silicium aqueux avec une teneur en SiO₂ allant de 10 à 60% en poids et d'un diamètre moyen des particules allant de 5 à 100 nm.

20. Procédé de préparation de liants selon au moins l'une des revendications 15 à 19, **caractérisé en ce que** l'on prépare d'abord un prémélange du silicate soluble dans l'eau et de l'acide silicique et ensuite, on ajoute les composés organiques de l'azote, solubles dans l'eau comme stabilisant.
